# EUROPÄISCHE PATENTSCHRIFT

(11) **EP 0 876 559 B1**
(45) Veröffentlichungstag und Bekanntmachung des Hinweises auf die Patenterteilung: **27.03.2002**
(21) Anmeldenummer: 97951875.0
(22) Anmeldetag: 10.11.1997
(51) Int. Cl.: F16D 59/02, F16D 55/28

(54) **EINRICHTUNG ZUR GERÄUSCHDÄMPFUNG BEI MECHANISCHEN BREMSEN**
NOISE-SILENCING DEVICE FOR MECHANICAL BRAKES
DISPOSITIF D'AMORTISSEMENT DU BRUIT POUR FREINS MECANIQUES

(30) Priorität: 11.11.1996 DE 19646493
(43) Veröffentlichungstag der Anmeldung: 11.11.1998
(73) Patentinhaber: Chr. Mayr GmbH & Co. KG, D-87665 Mauerstetten (DE)
(72) Erfinder: DROPMANN, Christoph, D-87600 Kaufbeuren (DE); WEISS, Harald, D-87600 Kaufbeuren (DE)
(74) Vertreter: Ruschke, Hans Edvard, Dipl.-Ing.
(86) Internationale Anmeldenummer: EP9706235
(87) Internationale Veröffentlichungsnummer: WO9821496

(56) Entgegenhaltungen:
- EP-A- 0 009 180
- WO-A-91/05177
- DE-U- 1 889 257
- DE-U- 29 706 124
- US-A- 4 982 815
- PATENT ABSTRACTS OF JAPAN vol. 016, no. 569 (M-1343), 9.Dezember 1992 & JP 04 219535 A (OOSAKI DENGIYOUSHIYA KK), 10.August 1992, in der Anmeldung erwähnt

## Beschreibung

Die Erfindung bezieht sich auf eine Einrichtung zur Geräuschdämpfung bei mechanischen Bremsen der in Anspruchs 1 beschriebenen Gattung, also z.B. auf ruhestrombetätigte elektromagnetische Federdruckbremsen zum sicheren Abbremsen und exakten Positionieren von rotierenden Massen, oder auf Kupplungsbremsaggregate oder auf übliche sonstige Sicherheits- und/oder Haltebremsen und dgl.

Mechanische Bremsen, z.B. Reibungsbremsen, neigen z.B. zu harten Schlägen beim Aufeinandertreffen der mechanischen Elemente, und auch aus anderen Ursachen zu unerwünschten Schwingungen, die insbesondere zur lästigen Geräuschentwicklung führen. Die Schläge und Schwingungen können außerdem eine Beschädigung der mechanischen Elemente hervorrufen. Geräusche beeinträchtigen schließlich das Wohl der sich in der Nähe aufhaltenden Personen.

Aus dem Artikel "Kühles Stoppen mit Federkraftbremsen" in der Zeitschrift "Der Konstrukteur"von 6/91 ist bekannt, elektromagnetisch gelüftete Bremsen über einen Gleichrichter mit Gleichstrom zu versorgen.

Es ist aus dem DE-GM 18 89 257 bekannt, zum Zweck der Geräuschdämpfung bei solchen Bremsen auf einem Kreis verteilte pufferförmige Körper vorzusehen.

Eine gattungsbildende aber nicht vorveröffentlichte Bremse ist aus der DE-U-29 706 124 bekannt.

Aus den Patent Abstracts of Japan, M-1343, Dec. 1992, Vol. 16/ No. 569 ist es bekannt, zur Dämpfung mechanischer Schläge im Gehäuse der Magnetspule, konzentrisch zu dieser und der Achse der Bremse in Ringnuten O-Ringe einzusetzen, die ein geringes Maß über die Oberfläche des Gehäuses überstehen, eine gegenüberliegende Ankerplatte berühren und beim Anzug der Ankerplatte zusammengedrückt werden. Diese Anordnung mit zwei konzentrischen O-Ringen genügt dann nicht, wenn höhere Kräfte auftreten.

Der Erfindung liegt daher die Aufgabe zugrunde, eine solche Dämpfung auch bei Auftreten höherer Kräfte zu sichern.

Die Lösung dieser Aufgabe erfolgt mit den Merkmalen des Patentanspruchs 1. Weitere Auführungsformen sind in den Unteransprüchen beschrieben.

Mit dem erfindungsgemäßen Gegenstand wird es möglich, eine beliebige Anzahl von dämpfenden Ringen vorzusehen. Dadurch eignet sich dieser bei mechanischen Bremsen, an denen größere Kräfte auftreten.

In den anliegenden Abbildungen sind Ausführungsbeispiele der Erfindung dargestellt, die nachfolgend beschrieben werden. Es zeigen:
- Abb. 1 eine an sich herkömmliche ruhestrombetätigte Federdruckbremse im Längsschnitt mit den erfindungsgemäßen schwingungsdämpfenden Mitteln im Längsschnitt,
- Abb. 2 ein anderes Ausführungsbeispiel einer Federdruckbremse, nämlich eine Zweikreisbremse, ebenfalls im Längsschnitt,
- Abb. 2a einen Ausschnitt aus Abb. 2 mit der Darstellung der gezeigten Einzelteile in der gebremsten Stellung,
- Abb. 2b einen der Abb. 2a entsprechenden Ausschnitt, jedoch in der gelüfteten Stellung der Bremse,
- Abb. 3 eine Ansicht, teilweise geschnitten, der Bremse nach Abb. 2, und
- Abb. 4 die untere Hälfte eines weiteren Ausführungsbeispiel einer Federdruckbremse, ebenfalls im Längsschnitt.

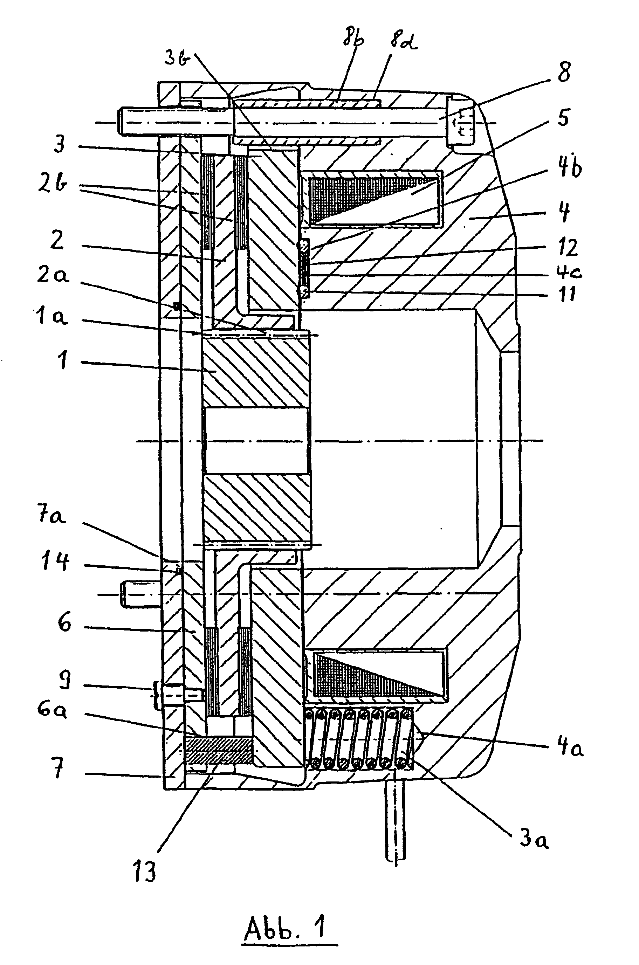

In Abb. 1 ist auf einer nicht dargestellten Welle eine Nabe 1 angeordnet, die eine axiale Umfangs-Verzahnung 1a besitzt. In diese greift eine entsprechende Verzahnung 2a einer Bremsscheibe 2 ein. Auf beiden axialen Seiten der Bremsscheibe 2 ist in Umfangsrichtung jeweils ein Bremsbelag 2b angeordnet. Auf der axial gesehen einen Seite der Bremsscheibe 2 befindet sich eine Ankerscheibe 3, die in Richtung des Bremseingriffs mit der Bremsscheibe 2 von Druckfedem 3a, vorzugsweise Schraubendruckfedern, belastet ist. Diese sind in Federbohrungen oder Ausnehmungen 4a eines feststehenden Spulenträgers oder Gehäuses 4 untergebracht. In dem Spulenträger 4 ist weiterhin eine Magnetspule 5 untergebracht, die im bestromten Zustand die Ankerscheibe 3 gegen die Kraft der Drukckfedern 3a an den Spulenträger 4 anzieht.

Auf der axial anderen Seite der Bremsscheibe 2 liegt eine Gegenscheibe 6 an, an die sich eine Endscheibe 7 anschließt. Die Endscheibe 7 und der Spulenträger 4 werden durch Zylinder-Schrauben 8 in einem festen Abstand gehalten, die auf einer Kreislinie in konstantem Abstand zueinander angeordnet sind. Jeder Stehbolzen 8 ragt von der axialen Endfläche des Spulenträgers 4 aus, die von der Endscheibe 7 weggerichtet ist, durch entsprechende Bohrungen 8d des Spulenträgers sowie durch entsprechende Bohrungen der Gegenscheibe 6 sowie der Endscheibe 7 hindurch. Weiterhin ragt jeder Stehbolzen 8 in entsprechende Bohrungen in der nicht gezeigten Maschinenwand. Auf diese Weise wird die gesamte Bremse an der Maschinenwand angeflanscht.

Die zwischen der Bremsscheibe 2 und dem Spulenträger 4 gelegene Ankerscheibe 3 weist an ihrer Umfangsfläche Ausnehmungen 3b auf, durch die entsprechende Hülsen 8b zur Aufnahme der Stehbolzen 8 hindurchragen. Die Hülsen ragen auch noch ein Stück weit in die Bohrung 8d des Spulenträgers 4 hinein, die dafür im Bereich der Längserstreckung der Hülse 8b im Spulenträger 4 einen Radius aufweist, bei dem die Hülse 8b genügend fest in den Spulenträger 4 eingepreßt ist, so daß aufgrund von Brems-Betätigungen keine Längsverschiebung zwischen der Hülse 8b und dem Spulenträger 4 auftritt. Die Ausnehmungen 3b der Ankerscheibe 3 sind dabei zur Führung der Ankerscheibe 3 mittels der Hülsen 8b angeordnet. Auf diese Weise ist die Ankerscheibe 3 gegenüber dem Spulenträger 4 längsverschieblich angeordnet. Diese wird, wie gesagt, durch die magnetische Kraft der Magnetspule 5 gegen die Kraft der Druckfedern 3a zum Spulenträger 4 hingezogen. Im stromlosen Zustand der Magnetspule 5 wird die Ankerscheibe 3 von den Druckfedern 3a zur Bremsscheibe 2 hingedrückt.

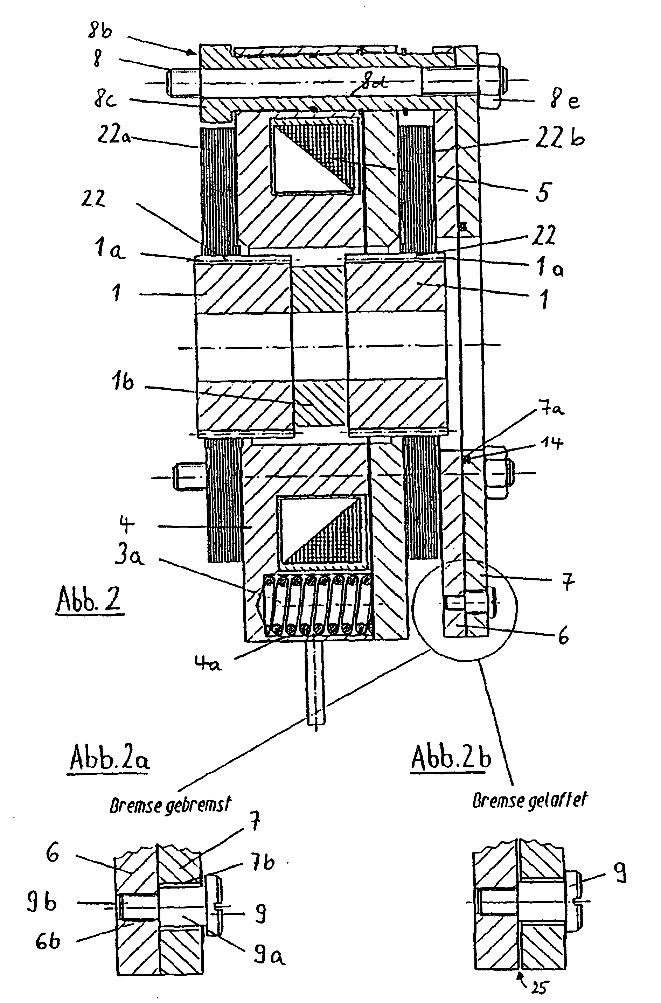

Weiterhin ist die Gegenscheibe 6 in beschränktem Maße gegenüber der Endscheibe 7 axial beweglich. Der maximale Abstand bzw. das maximale Spiel zwischen der Endscheibe 7 und der Gegenscheibe 6 wird durch auf einer Kreisbahn im konstanten Abstand zueinander angeordnete Schrauben 9 festgelegt (s. Abbildungen 2a und 2b). Dabei wird die Schraube 9 in entsprechende Bohrungen 7b der Endscheibe 7 eingeführt und von derselben Seite her in entsprechend vorgesehene Gewindebohrungen 6b in der Gegenscheibe 6 eingeschraubt. Im oberen, nahe dem Schraubenkopf gelegenen Bereich weist die Schraube 9 einen Schaft 9a auf, der einen größeren Außendurchmesser besitzt als das Gewinde 9b am freien Ende der Schraube 9, so daß der Schaft 9a als Anschlag gegenüber der Gegenscheibe 6 wirkt. Gleichzeitig ist die axiale Länge des Schafts 9a größer als die Dicke der Gegenscheibe 6, so daß sich auf diese Weise ein maximales axiales Spiel zwischen der Gegenscheibe 6 und der Endscheibe 7 ergibt.

Zum Zweck der Dämpfung von Schwingungen, insbesondere von Geräuschen, sind erfindungsgemäß schlag-, schwingungs- und/oder geräuschdämpfende Mittel vorgesehen, nämlich ein oder mehrere, vorzugsweise drei auf dem Umfang verteilt angeordnete O-Ringe 11, die in kurze zylinderförmige Ausnehmungen 4b des Gehäuses 4 eingelegt sind und etwas, z.B. 1,5 mm, über die Oberfläche des Gehäuses 4, d.h. über die Anlagefläche für die Ankerscheibe 3, vorstehen.

In das Kreisinnere der O-Ringe 11 ist eine zähelastische Platte 12, z. B. aus Preßstoff, eingelegt, die etwa 0,2 mm gegenüber der Anlagefläche der Ankerscheibe vorsteht. Um die zähelastische Platte 12 in der entsprechenden Ausnehmung 4b zu befestigen, wird die zähelastische Platte 12 in diese geklebt oder mittels einer dünnen Schraube befestigt, die in Richtung der zentralen Achse der Ausnehmung 4b verläuft und in eine entsprechende Bohrung auf der Grundfläche der Ausnehmung 4b eingeschraubt wird. Wenn die zähelastische Platte 12 in das Innere des O-Rings 11 in der Ausnehmung 4b eingesetzt wird, wird der O-Ring 11 aufgrund der Abmessungen der zähelastischen Platte 12 von der zähelastischen Platte 12 gegen die Umfangswand der Ausnehmung 4b gedrückt. Dadurch wird der O-Ring 11 in der Ausnehmung 4b zwischen deren Umfangswand und der zähelastischen Platte 12 festgehalten.

Die zähelastische Platte 12 verhindert ein metallisch hartes Aufschlagen der Ankerscheibe 3 auf das Gehäuse 4 beim Lüften der Bremse und dient dabei als Führung für den O-Ring 11. Der oder die O-Ringe 11 liegen exzentrisch zur Achse der Bremse. So kommt es beim elektromagnetischen Lösen der Bremse durch das Anziehen der Ankerscheibe 3 in Richtung auf den Elektromagneten 5 zu keiner schlagartigen Anlage am Gehäuse 4, d.h. ein hartes Aufschlagen ist vermieden.

Ein anderes Mittel zur Dämpfung, das zusätzlich zu den O-Ringen 11 angewandt werden kann, besteht in länglichen elastischen Körpern oder elastischen Dämpfungsmitteln 13, die ebenso exzentrisch zur Achse der Bremse liegen. Hier liegen sie in Ausnehmungen 6a der Gegenscheibe 6 und berühren die Ankerscheibe 3. Die länglichen elastischen Körper 13 werden vorzugsweise in die Ausnehmungen 6a eingeklebt. Die Form der elastischen Dämpfungsmittel 13 kann beliebig sein, bevorzugt werden quaderförmige oder zylindrische Formen. Dabei wird für die elastischen Dämpfungsmittel 13 vorzugsweise ein Abschnitt einer O-Ring-Rundschnur verwendet, die eine entsprechende Länge und eine entsprechende Querschnittsform und Dicke aufweist.

Als alternatives oder weiteres anwendbares Mittel zur Dämpfung kommt ein Ring 14, z.B. O-Ring, in Frage, der konzentrisch zur Achse der Bremse liegt, in eine Ringnut 7a in der Endscheibe 7 eingebettet ist und die angrenzende Oberfläche der Gegenscheibe 6 berührt. Der O-Ring 14 wird vorzugsweise in die Ringnut 7a eingeklebt. Auch er steht ein geringes Maß, z.B. 0,2 mm, über die Oberfläche der Endscheibe 7 vor. Ein gewisses Spiel bzw. ein "Luftspalt" zwischen der Gegenscheibe 6 und der Endscheibe 7 kann durch die Schrauben 9 eingestellt und aufrechterhalten werden (siehe Abb. 2a).

Dadurch, daß der O-Ring 14 ein geringes Maß in den Luftspalt hineinragt, wird ein hartes Aufschlagen der Scheiben 6 und 7 aufeinander verhindert.

In dem in der Abb. 2 dargestellten Ausführungsbeispiel sind auf der Welle zwei Naben 1 mit einem den Abstand sichernden Zwischenring 1b angeordnet. Die auf dem Umfang der Naben 1 vorgesehenen Axialverzahnungen 1a greifen in entsprechende Axialverzahnungen 22c einer ersten 22a und einer zweiten 22b Bremsscheibe ein. Zwischen den beiden Bremsscheiben 22a, 22b sind ein Spulenträger 4 und eine Ankerscheibe 3 angeordnet, die konzentrisch zueinander gelegen sind, wobei der Spulenträger 4 neben der ersten Bremsscheibe 22a und die Ankerscheibe 3 neben der zweiten Bremsscheibe 22b gelegen ist. Auf der der Ankerscheibe 3 axial gegenüberliegenden Seite der zweiten Bremsscheibe 22b ist die Endscheibe 7 gelegen, während zwischen der Endscheibe 7 und der zweiten Bremsscheibe 22b die Gegenscheibe 6 angeordnet ist. Vorzugsweise liegen die zylinderförmigen Außenkanten der Gegenscheibe 6 und der Endscheibe 7 konzentrisch übereinander und liegen auch konzentrisch über den zylindrischen Außenkanten des Spulenträgers 4 und der Ankerscheibe 3.

Der maximale Abstand zwischen dem Spulenträger 4 und der Endscheibe 7 wird durch auf einer Kreisbahn mit konstantem Abstand zueinander angeordneten Stehbolzen 8 mit zugehörigen Hülsen 8b, in die die Stehbolzen 8 eingeschraubt sind, festgelegt. Die Hülsen 8b stoßen dabei mit ihrem einen Ende an die diesen zugewandte axiale Fläche der Endscheibe 7 an und ragen von dort in axialer Richtung durch die Gegenscheibe 6, die Ankerscheibe 3 und den Spulenträger 4 hindurch. An ihrem anderen Ende weisen die Hülsen 8b jeweils ein flanschförmiges Endstück 8c auf, das außerhalb der entsprechenden Bohrung 8d im Spulenträger 4 gelegen ist und gegenüber der Bohrung 8d verbreitert ist.

Jeder Stehbolzen 8, der in die Hülse 8b eingeschraubt ist, ragt mit seinem auf der Seite der Endscheibe 7 liegenden Ende über die Hülse 8b hinaus. Am freien Ende des Stehbolzens 8 ist eine Mutter 8e aufgeschraubt. Da die Hülse 8b auch durch entsprechende Bohrungen in der Ankerscheibe 3 hindurchragt, wirkt die Hülse 8b somit als axiale Führung für den Spulenträger 4, die Ankerscheibe 3 und die Gegenscheibe 7 in ihrer axialen Bewegungen zueinander.

Der maximale axiale Abstand zwischen der Endscheibe 7 und der Gegenscheibe 6 wird, wie anhand der Abbildungen 2a, 2b beschrieben wurde, durch die Schrauben 9 festgelegt, die entlang und innerhalb des Umfangs der Endscheibe 7 bzw. der Gegenscheibe 6 angeordnet sind. Durch die Schraube 9 werden die Endscheibe 7 und die Gegenscheibe 6 in beschränktem Maße axial gegeneinander verschieblich. Wenn im gelüfteten Zustand der Bremse die Endscheibe 7 und die Gegenscheibe 6 auseinander bewegt sind, ist ein Luftspalt 25 zwischen diesen vorhanden (Abb. 2b). Im gebremsten Zustand liegen die Endscheibe 7 und die Gegenscheibe 6 aneinander an. Aufgrund der Betätigung der Bremse wird die Ankerscheibe 3 gegen die Bremsscheibe 2 (Abb. 1) bzw. die Bremsscheibe 22b (Abb. 2) gedrückt, wodurch die Bremsscheibe 2 bzw. 22b gegen die Gegenscheibe 6 bewegt wird. Dadurch wird die Gegenscheibe 6 wiederum gegen die Endscheibe 7 gedrückt, wodurch die im Luftspalt 25 befindliche Luft verdrängt wird. Die Verdrängung der Luft aus dem Luftspalt 25 bewirkt eine zusätzliche Dämpfung der Aufschlagbewegung der Gegenscheibe 6 auf die Endscheibe 7. Nahe der inneren radialen Umrandung der Endscheibe 7 ist der O-Ring 14 vorgesehen. Der O-Ring 14 bewirkt eine Abdichtung radial nach innen, so daß die Luft nur radial nach außen aus dem Luftspalt 25 entweichen kann. Dadurch wird der beschriebene Dämpfungseffekt noch verstärkt.

In einer entsprechenden Ausnehmung des Spulenträgers 4 ist zumindest eine Magnetspule 5 angeordnet. Auf einem Kreis außerhalb der Magnetspule 5 und in einem konstanten vorbestimmten Abstand zueinander sind im Spulenträger 4 Federbohrungen 4a vorgesehen, die zur Seite der Ankerscheibe 3 hin offen sind. In jeder Federbohrung 4a ist jeweils eine Druckfeder 3a gelegen. Im stromführenden Zustand zieht die Magnetspule 5 die Ankerscheibe 3 gegen den Druck der Druckfedern 3a an.

Analog zu der in der Abbildung 1 dargestellten Ausführungsform ist in der Endscheibe 7 eine Ringnut 7a vorgesehen, in die ein elastisches Mittel oder ein O-Ring 14 eingeklebt ist. Dieser wirkt als Dämpfung bei der Bewegung der Gegenscheibe 6 zur Endscheibe 7 hin, die durch die Druckfedern 3a bewirkt wird.

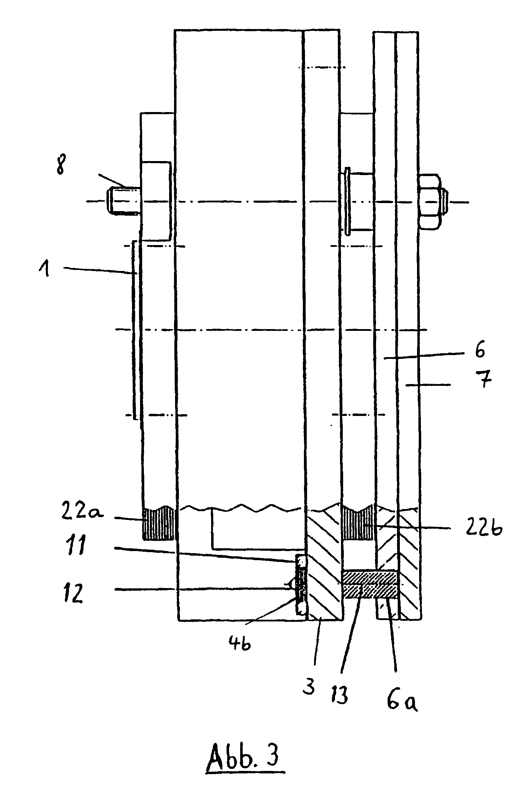

Wie in der Abbildung 3 gezeigt ist, kann bei der Ausführungsform nach den Abbildungen 2 und 3 zur Geräuschdämpfung zwischen der Ankerscheibe 3 und der Endscheibe 7 das längselastische Mittel 13 vorgesehen sein, dessen eines Ende in entsprechenden Ausnehmungen 6a der Gegenscheibe 6 eingeklebt ist.

Weiterhin können auf der axialen, der Ankerscheibe 3 zugewandten Seite des Spulenträgers 4 mehrere Ausnehmungen 4b vorgesehen sein, die zur Ankerscheibe 3 hin offen sind und auf deren Boden 4c die zähelastische Platte 12 eingeklebt oder mittels einer Schraube befestigt ist und in denen zwischen der zähelastischen Platte 12 und der radialen Wand der Ausnehmung 4b der O-Ring 11 eingeklebt oder eingeklemmt ist. Der O-Ring 11 und die zähelastische Platte 12 ragen in der beschriebenen Weise aus der Ausnehmung 4b heraus.

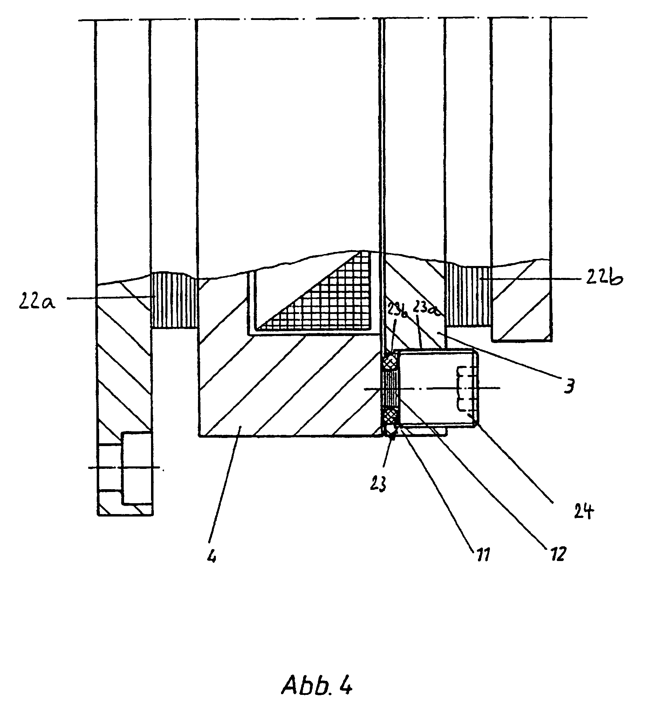

Eine weitere Ausführungsform des erfindungsgemäßen Dämpfungsmittels zur Bewirkung einer Dämpfung zwischen der Ankerscheibe 3 und dem Spulenträger 4 ist in der Abbildung 4 dargestellt. Nach dieser Ausführungsform sind in der Ankerscheibe 3 auf einer Kreisbahn innerhalb der zylinderförmigen Umfangsfläche der Ankerscheibe 3 und in einem konstanten Abstand zueinander Bohrungen 23 vorgesehen. Diese Bohrungen 23 weisen einen Gewindeabschnitt 23a auf der dem Spulenträger 4 abgewandten Seite der Ankerscheibe 3 und einen engeren gewindelosen Abschnitt 23b in dem dem Spulenträger 4 zugewandten Bereich der Ankerscheibe 3 auf. In die Bohrungen 23 sind Gewindestifte 24 eingeschraubt. Auf die axiale Fläche jedes Gewindestifts 24 ist die zähelastische Platte 12 aufgeklebt oder mit einem Befestigungsmittel, z.B. einer Schraube, befestigt. Weiterhin ist zwischen der zähelastischen Platte 12 und der Innenwandung des engeren Abschnitts 23b der O-Ring 11 eingedrückt. In der beschriebenen Weise ragen die zähelastische Platte 12 und der O-Ring 11 über die axiale, dem Spulenträger 4 zugewandte Fläche hinaus, wobei das Maß des Überstehens durch den Gewindestift 24 einstellbar ist. Auf diese Weise wird auch die Stärke der Dämpfung durch den O-Ring 11 und die zähelastische Platte 12 eingestellt.

Der Vorteil der Einstellbarkeit der Dämpfung zwischen dem Spulenträger 4 und der Ankerscheibe 3 kommt besonders bei zunehmendem Verschleiß der Bremsscheiben 22a, 22b zur Geltung, durch den die Beweglichkeit der Ankerscheibe 3 gegenüber dem Spulenträger 4 zunimmt. Damit nehmen auch die auftretenden Geräusche zu, da die ursprünglich ausreichende Dämpfung mittels der Elemente 11, 12 zu gering wird. Mit Hilfe der Gewindestifte 24 kann jedoch die Dämpfung je nach der Größe des aufgetretenen Verschleißes nachjustiert werden.

Die Wirkungsweise wird an Hand der Auführungsbeispiele nach den Abbildungen 1 und 2 beschrieben:

Im entregten oder stromlosen Zustand der Magnetspule 5 drücken die Druckfedern 3a die Ankerscheibe 3 gegen die Bremsscheibe 2 bzw. 22. Das bewirkt eine Bremsung der Nabe bzw. Welle durch Reibung. Wird die Magnetspule 5 erregt oder bestromt, zieht sie die Ankerscheibe 3 an und unterbindet den Reibeingriff mit der Bremsscheibe 2 bzw. 22. Die Bremsung hört auf und die Nabe 1 kann frei durchdrehen, d.h. die ungehinderte Übertragung des Drehmoments ist möglich.

Wenn abgebremst werden soll, wird die Zufuhr von Strom zur Magnetspule 5 unterbrochen, die Federn 3a drücken die Ankerscheibe 3 gegen die Bremsscheibe 2 bzw. 22 und bewirken so die augenblickliche Bremsung. Die elastischen Mittel 11, 12, 13 und 14 verhindern dabei ein schlagartiges Einfallgeräusch und darüber hinaus sehr weitgehend das Entstehen von Schwingungen und Geräuschen.

Infolge des Übermaßes der elastischen Mittel 11, 12 und 14 entsteht eine leichte Vorspannung. Das erzeugt eine geringe zusätzliche Federkraft zu der der Federn 3a. Daraus ergibt sich eine entsprechende Erhöhung des Bremsmoments. Beim Anzug der Ankerscheibe werden die elastischen Mittel 11, 12, 13 und 14 beaufschlagt und bewirken so eine geringe Verzögerung, die eine Dämpfung der Schläge und Schwingungen nach sich zieht.

### Bezugszeichenliste

- 1: Nabe
- 1a: axiale (Umfangs-) Verzahnung
- 1b: Zwischenring
- 2: Bremsscheibe
- 2a: Verzahnung
- 2b: Bremsbeläge
- 3: Ankerscheibe
- 3a: Druckfedern, Schraubendruckfedern
- 3b: Ausnehmungen
- 4: Spulenträger / Gehäuse
- 4a: Ausnehmungen für Druckfedern, Federbohrung
- 4b: Ausnehmungen für 11, 12
- 4c: Boden der Ausnehmungen 4b
- 5: Magnetspule
- 6: Gegenscheibe
- 6a: Ausnehmungen
- 6b: Gewinde /-bohrung
- 7: Endscheibe
- 7a: Ringnut
- 7b: Bohrungen
- 8: Zylinder-Schrauben / Stehbolzen
- 8b: Hülse
- 8d: Bohrungen des Spulenträgers
- 8c: flanschförmiges Endstück
- 8e: Mutter
- 9: Schrauben
- 9a: Schaft
- 9b: Gewinde
- 11: O-Ringe
- 12: zähelastische Platte
- 13: elastische Körper, Dämpfungsmittel
- 14: Ring, O-Ring
- 22a,b: Bremsscheiben
- 22c: Axialverzahnung
- 23: Bohrungen
- 23a: Gewindeabschnitt
- 23b: gewindeloser engerer Abschnitt
- 24: Gewindestift
- 25: Luftspalt

## Patentansprüche

1. Elektromagnetisch betätigte oder gelüftete Reibungsbremse, mit die Bremskraft erzeugenden und übertragenden mechanischen Elementen, mit elastischen Ringen, insbesondere O-Ringen als Mittel zur Dämpfung von Schlägen und Schwingungen, insbesondere von Geräuschen, welche Ringe in Ausnehmungen eines mechanischen Elementes gegenüber einem anderen mechanischen Element eingelegt sind und ein Übermaß zur Erzeugung einer Vorspannung aufweisen, wobei
die O-Ringe (11) exzentrisch zur Achse der Bremse angeordnet sind und wobei in das innere der O-Ringe (11) jeweils eine zähe elastische Platte (12) zur Führung der O-Ringe (11) eingesetzt ist.

2. Bremse nach Anspruch 1, **dadurch gekennzeichnet, daß** die O-Ringe (11) in Ausnehmungen (4b) eines Gehäuses (4) eingelegt sind, das eine Magnetspule (5) zur Betätigung oder Lüftung der Bremse aufnimmt.

3. Bremse nach Abspruch 1 oder 2, **dadurch gekennzeichnet, daß** die O-Ringe (11) in axial verlaufenden Abschnitten (23b) angeordnet sind, wobei die axiale Lage der O-Ringe (11) in den Abschnitten (23b) durch jeweils einen Gewindestift (24) festgelegt ist.

4. Bremse nach Anspruch 1, 2, oder 3, **dadurch gekennzeichnet, daß** konzentrisch zur Achse der Bremse in eine Ringnut (7a) eines mechanischen Elementes (7) ein weiterer elastischer Ring (14), insbesondere ein O-Ring, eingelegt ist.

5. Bremse nach Anspruch 1, 2, 3, oder 4, **dadurch gekennzeichnet, daß** zwei mechanische Elemente (6 und 7) mit einer Schraube (9) über einen Schaft (9a) verbunden sind und dazwischen einen Luftspalt (25) aufweisen, welcher beim Bremsen entfällt und somit eine Dämpfungswirkung erzeugt.

6. Bremse nach einem der vorhergehenden Ansprüche, **gekennzeichnet durch** längliche elastische Körper (13) mit axialer Vorspannung als zusätzliche Mittel zur Dämpfung.

7. Bremse nach Anspruch 6, **dadurch gekennzeichnet, daß** die elastischen Körper (13) die Form von Quadern oder Zylindern haben.

8. Bremse nach Anspruch 7, **dadurch gekennzeichnet, daß** die elastischen Körper (13) in Ausnehmungen (6a) eines mechanischen Elementes (6) eingesetzt sind und an einem anderen mechanischen Element (3) anliegen.

## Claims

1. Electromagnetically actuated or released friction brake, having mechanical elements which produce and transmit the braking force, having elastic rings, in particular 0-rings, as means for damping impacts and vibrations, in particular noises, which rings are placed into recesses of one mechanical element opposite another mechanical element and are oversized in order to produce a preliminary stress, the 0-rings (11) being arranged eccentrically with respect to the axis of the brake, and a respective, tough, elastic plate (12) for guiding the 0-rings (11) being inserted into the interior of the 0-rings (11).

2. Brake according to Claim 1, **characterized in that** the 0-rings (11) are placed into recesses (4b) of a housing (4) which contains a magnet coil (5) for actuation or release of the brake.

3. Brake according to Claim 1 or 2, **characterized in that** the 0-rings (11) are arranged in sections (23b) running axially, the axial position of the O-rings (11) in the sections (23b) being fixed by a respective threaded pin (24).

4. Brake according to Claim 1, 2 or 3, **characterized in that** a further elastic ring (14), in particular an 0-ring, is inserted concentrically with respect to the axis of the brake into an annular groove (7a) of a mechanical element (7).

5. Brake according to Claim 1, 2, 3 or 4, **characterized in that** two mechanical elements (6 and 7) are connected to a screw (9) via a shank (9a) and have in between an air gap (25) which disappears during braking and therefore produces a damping effect.

6. Brake according to one of the preceding claims, **characterized by** elongated, elastic bodies (13) having axial preliminary stress as additional damping means.

7. Brake according to Claim 6, **characterized in that** the elastic bodies (13) are in the form of cubes or cylinders.

8. Brake according to Claim 7, **characterized in that** the elastic bodies (13) are inserted into recesses (6a) of a mechanical element (6) and bear against another mechanical element (3).

## Revendications

1. Frein de friction actionné et aéré de manière électromagnétique avec des éléments mécaniques créant et transmettant la force de friction, avec des anneaux élastiques, notamment des joints toriques comme moyens pour amortir les coups et les vibrations notamment les bruits, lesquels anneaux sont placés dans des évidements d'un élément mécanique face à un autre élément mécanique et qui sont surdimensionnés pour créer une précontrainte où les joints toriques (11) sont disposés de manière excentrique par rapport à l'axe du frein et où une plaque (12) tenace et élastique est insérée à chaque fois à l'intérieur des joints toriques (11) afin de guider les joints toriques (11).

2. Frein selon la revendication 1, **caractérisé en ce que** les joints toriques (11) sont disposés dans des évidements (4b) d'un boîtier (4) ; lequel boîtier reçoit une bobine d'un électroaimant (5) pour actionner ou aérer les freins.

3. Frein selon la revendication 1 ou 2, **caractérisé en ce que** les joints toriques (11) sont disposés dans des tronçons (23b) s'étendant axiallement ; où la position axiale des joints toriques (11) est fixée dans les tronçons (23b) chaque fois par une goupille filetée (24).

4. Frein selon les revendications 1, 2 ou 3, **caractérisé en ce qu'**un autre anneau (14) élastique notamment un joint torique est disposé de manière concentrique par rapport à l'axe du frein dans une rainure annulaire (7a) d'un élément mécanique (7).

5. Frein selon les revendications 1, 2, 3 ou 4, **caractérisé en ce que** deux éléments mécaniques ( 6 et 7) sont reliés par une vis (9) au moyen d'une tige (9a) et présentent entre eux un interstice (25) qui est supprimée lors du freinage et produit un effet d'amortissement.

6. Frein selon une des revendications précédentes, **caractérisé par** des corps (13) élastiques et allongés avec une précontrainte axiale destinés comme des moyens supplémentaires pour amortir.

7. Freins selon la revendication 1, **caractérisé en ce que** les corps élastiques (13) ont une forme de parallélépipède rectangle ou de cylindre.

8. Frein selon la revendication 7, **caractérisé en ce que** les corps (13) élastiques sont placés dans des évidements (6a) d'un élément mécanique (6) et reposent sur un autre élément (3) mécanique.
